# EUROPEAN PATENT SPECIFICATION

(11) **EP 4 198 082 B1**
(45) Date of publication and mention of the grant of the patent: **23.07.2025**
(21) Application number: 22213005.6
(22) Date of filing: 13.12.2022
(51) Int. Cl.: C08L 9/00, B60C 1/00, C08K 3/04

(54) **RUBBER COMPOSITION AND TIRE CONTAINING GRAPHENE**
ABRIEBZUSAMMENSETZUNG UND REIFEN MIT GRAPHEN
COMPOSITION DE CAOUTCHOUC ET PNEU CONTENANT DU GRAPHÈNE

(30) Priority: 20.12.2021 US 202163265702 P; 30.11.2022 US 202218060148
(43) Date of publication of application: 21.06.2023
(73) Proprietor: The Goodyear Tire & Rubber Company, Akron, OH 44316 (US)
(72) Inventor: DENNIS-PELCHER, Robert Vincent, Uniontown, 44685 (US)
(74) Representative: Kutsch, Bernd

(56) References cited:
- WO-A2-2020/209975
- US-A1- 2014 323 610
- US-A1- 2018 346 684

## Description

### FIELD OF THE INVENTION

This invention relates to a rubber composition and a tire having a rubber component, such as a tread, with graphene, and to methods of manufacturing same.

### BACKGROUND OF THE INVENTION

Tires with reduced rolling resistance are desirable for the improved fuel economy for vehicles. Other desirable performance attributes for tires include reduced heat buildup in the tire tread during use to promote tire tread durability. To promote one or more of such desirable properties, the hysteretic property of the tire rubber is modified. Fillers in the tire composition are known to influence hysteresis of the rubber. For example, a reduction in hysteresis loss of tire rubber may be achieved by changing a proportion of reinforcing carbon black filler in the tire rubber. This modification may be achieved by replacement with other fillers, for example, an increase is precipitated silica filler content may balance the reduction in carbon black. These modifications ideally promote an increase in the rubber's physical rebound property.

There are problems, however, with filler modifications. Typically, there are tradeoffs to filler modifications. Improvement in one attribute causes a lessening of one or more other beneficial attributes. As an example, a significant reduction in rubber reinforcing carbon black content of the tread rubber also produces a significant reduction in the thermal and electrical conductivity of the rubber. This is particularly apparent as the rubber reinforcing carbon black content falls below what is known as its percolation point. A tread rubber composition with reduced rubber reinforcing carbon black content but having substantial thermal conductivity and electrical conductivity for the tire tread rubber composition is desirable.

One filler proposed to provide such a result is graphene. Graphene has shown to provide an improvement in thermal conductivity and in electrical conductivity of the tread and/or carcass rubber composition. Graphene filler particles are typically very fine with an average particle thickness in a range of from 1 nm to 20 nm and an average lateral length to thickness dimension in a range of from 10/1 to 10,000/1. The graphene particles are very thin platelet-like structures. These fine powders can be manufactured from a variety of processes, typically starting with natural flake graphite as the feedstock. The production processes may include mechanical, chemical, and/or thermal processes that aim to separate and isolate layers of graphene from the graphite feedstock. One specific manufacturing process is commonly referred to as the modified Hummers Method, in which graphite is treated with potassium permanganate and highly concentrated sulfuric acid. This manufacturing method disrupts the delocalized electronic structure of graphite and imparts a variety of oxygen-based chemical functionalities to the surface. A graphite oxide is produced with a typical carbon-to-oxygen ratio of 1.4.

This graphite oxide is an intermediate product in the production of graphene. The graphite oxide is then exfoliated by a rapid thermal expansion at temperatures in the range of 700°C to 1200°C or by chemical exfoliation and reaction with hydrazine (N₂H₂) to produce graphene particles.

There are, however, problems with adequate dispersion of the graphene in the rubber. Improperly dispersed graphene can have potentially negative effects on compound properties, especially tear/crack resistance and/or treadwear resistance. One proposed, and often used solution for improved dispersion is to functionalize the graphene particle surface to promote interaction with a matrix, such as a diene-based elastomer, in this case contained in the rubber composition. Functionalization of the particle surfaces can improve coupling of the graphene particles to the diene-based elastomers. Thus, functionalization facilitates dispersion of the graphene filler in the rubber composition during mixing.

Proper dispersion is advantageous as it promotes rubber-to-graphene particle bonding and/or interactions. In some cases, functionalization of the particle surface can be beneficial for certain performance criteria while being detrimental to others. For example, bonding and/or strong interactions between the graphene and rubber, in turn, is believed to produce low rolling resistance and improved treadwear resistance, among other performance enhancements, such as improved tear resistance.

Production of graphene using methods such as the modified Hummers method and the subsequent functionalization of the particle surface has its drawbacks. These processes often require the use of harsh, and even toxic chemicals, negatively impacting the sustainability of the process and the final products, as well as increasing the cost. The production of graphene from other sources of carbon feedstock are available and desirable. These sources include waste and/or biomass raw material. The benefits of these sources include reduced cost and sustainability of downstream products compared to many other production processes.

While current rubber compounds are commercially successful, there is a need to fabricate tire treads and carcass compounds to achieve simultaneously high levels of wear and stress resistance and low heat buildup (low tan delta)/low rolling resistance to achieve more efficient energy use together with improved tire life and durability in original and replacement tire tread and carcass compounds.

### SUMMARY OF THE INVENTION

The invention relates to a tire in accordance with claim 1 and to a rubber composition in accordance with claim 12.

Dependent claims refer to preferred embodiments of the invention.

The present invention is directed to improved rubber compositions and to tires using the same.

In accordance with an embodiment of the invention, a pneumatic tire made with a rubber composition includes 100 phr of at least one diene-based elastomer and 1 phr to 50 phr, and more preferably 1 phr to 20 phr of turbostratic graphene.

Turbostratic graphene differs microstructurally from other types of graphene, including AB-stacked graphene. These microstructural differences unexpectedly produce at least improved abrasion and tear resistance of the rubber. By way of example, turbostratic graphene is less than 25 wt.% oxygen. Other differences can be detected and quantified by Raman Spectroscopy. In particular, the turbostratic graphene exhibits a peak at 1880 cm⁻¹ and a peak at 2030 cm⁻¹, one or both of which peaks are absent in other types of graphene. Quantification may include ratios of peak intensity. For example, turbostratic graphene exhibits a 2D peak intensity (I_{2D}) to G peak intensity (I_{G}) ratio of at least 0.5. Additionally, turbostratic graphene exhibits a D peak intensity (I_{D}) to G peak intensity (I_{G}) ratio of less than 1. Further, turbostratic graphene lacks an M peak at 1750 cm⁻¹ present in other types of graphene. The turbostratic graphene is preferably not functionalized prior to dispersing in an elastomer. In that regard, in one embodiment, the rubber composition further includes 0.5 phr to 150 phr of carbon black and 1 to 20 phr oil and, in one embodiment, lacks AB-stacked graphene.

By virtue of the foregoing, there is thus provided a rubber composition for use in a tire that can provide desirable tire performance properties, such as improvements in abrasion and tear resistance while advantageously increasing the sustainability of tires and without negatively impacting hysteresis, stiffness, and/or tensile strength, for example.

### BRIEF DESCRIPTION OF THE DRAWINGS

The accompanying drawings, which are incorporated in and constitute a part of this specification, illustrate embodiments of the invention and, together with detailed description given below, serve to explain the invention.

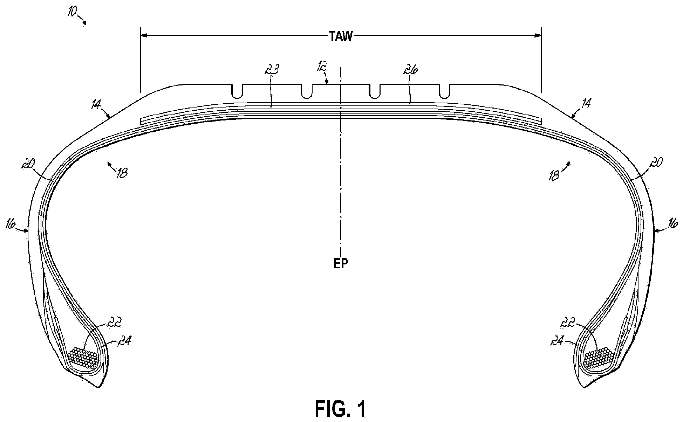

FIG. 1 is a cross-sectional view of a pneumatic tire in accordance with one embodiment of the invention.

### DETAILED DESCRIPTION OF PREFERRED EMBODIMENTS OF THE INVENTION

In the description of this invention, the terms "rubber" and "elastomer" are used interchangeably, unless otherwise prescribed. In addition, the term "phr" refers to parts of a respective material per hundred parts by weight of rubber or elastomer.

"Pneumatic tire" refers to a laminated mechanical device of generally toroidal shape (usually an open-torus) having bead cores and a tread and made of rubber, chemicals, fabric, and steel, or other materials. When mounted on the wheel of a motor vehicle or aircraft (and the like), the tread provides traction and the tire supports the vehicle load. "Carcass" means the tire structure apart from the belt structure, tread, undertread, and sidewall rubber over the plies, but including the bead cores. "Sidewall" refers to that component that comprises a portion of the outside surface of a tire between the tread and the bead. "Tread" refers to a molded rubber component which, when bonded to a tire casing, includes that portion of the tire that contacts the road when the tire is normally inflated and under normal load.

"Axial" and "axially" refer to the lines or directions that are parallel to an axis of rotation of the tire. "Radial" and "radially" refer to the lines or directions toward or away from the axis of rotation of a tire. "Circumferential" or "circumferentially" refers to the portion of the tire at or near the farthest radial distance from the axis of rotation. "Equatorial Plane" (or "EP") refers to the plane perpendicular to the tire's axis of rotation and passing through the center of its tread. Such terms are well known to those having skill in the rubber mixing or rubber compounding art.

FIG. 1 shows a simplified cross-section of a pneumatic tire 10 that has an improved lifespan and capacity for retreading. The tire 10 includes tread portion 12 from which a pair of sidewalls 16 extend and are connected to the tread portion 12 by shoulder regions 14. The tread 12 is adapted to be ground contacting when the tire 10 is in use. The shoulder regions 14 extend predominantly axially outwardly from the tread portion 12. And, the sidewalls 16 extend predominantly radially inwardly from the shoulder regions 14.

A carcass 18 of the tire 10 can include one or more continuous radial plies 20 extending from side to side. One ply is shown in the FIG. 1. The carcass 18 is located radially inwardly from the tread portion 12 and axially inwardly from the sidewalls 16. The carcass 18 acts as a supporting structure for components located axially or radially outwardly from the carcass 18 (e.g., the tread portion 12 and sidewalls 16). The one or more radial plies 20 may comprise cords or reinforcing wires of, for example, steel, nylon, polyester, rayon, glass, etc., embedded in a rubber matrix. Carcass 18 of the tire has a pair of axially spaced bead wires 22 around which are wrapped the distal ends of the radial plies 20. The bead wires 22 may comprise, for example, substantially inextensible coils made of round metal filaments.

In one embodiment, the tire 10 further includes an optional inner liner (or air barrier layer) 24 disposed radially inwardly from the carcass 18. The optional rubber tire inner liner 24 may be any known rubber inner liner for use in pneumatic tires 10. In one example, the rubber inner liner 24 can be a non-butyl general purpose rubber (GPR) or a rubber composition disclosed herein. In another example, the rubber inner liner 24 can be a sulfur curative-containing halobutyl rubber composition of a halobutyl rubber, for example, chlorobutyl rubber or bromobutyl rubber. A halobutyl rubber inner liner layer may also contain one or more sulfur curable diene-based elastomers, for example, cis 1,4-polyisoprene natural rubber, cis 1,4-polybutadiene rubber, and styrene/ butadiene rubber, or mixtures thereof. Rubber inner liner 24 is typically prepared by conventional calendaring or milling techniques to form a strip of uncured compounded rubber of appropriate width. When the tire 10 is cured, the rubber inner liner 24 becomes an integral, co-cured, part of the tire 10.

With continued reference to the FIG. 1, the tire 10 further includes at least one fiber-reinforced rubber layer 26, which can be supported by the carcass 18 and interposed between the tread portion 12 and the carcass 18. The fiber-reinforced rubber layer 26 can define a barrier/barrier layer and includes a rubber compound that is reinforced with one or more types of fiber 28 and has one or more chemical compounds that provide desirable barrier properties (e.g., abrasion resistance properties), thereby helping to prevent wear and/or tear from extending beyond the tire tread 12 and into its underlying layer(s), such as the carcass 18, and desirably increasing the overall lifespan of the tire 10.

In accordance with one embodiment of the invention, one or more portions of the tire 10, described above, are made of a cured rubber of a rubber composition disclosed herein. By way of example, the cured rubber may be included in one or more of the tread 12 and/or the sidewall 16 of the tire 10 and including, without limitation, the inner layer 24 and/or rubber layer 26. In one embodiment, the rubber composition may include 100 phr of at least one diene-based elastomer in which one or more particulate fillers are dispersed. The filler includes turbostratic graphene, described below, and may include other particulate fillers. As such, the rubber composition may include a combination of fillers of different compositions and amounts. By way of example, the filler may include a mixture of particles of carbon black, precipitated silica, and graphene, including turbostratic graphene.

In embodiments of the invention, various rubbers, including mixtures thereof, can be used as the rubber component of the rubber composition. Various diene-based elastomers may be used for the rubber composition. For example, polymers and copolymers of at least one monomer comprised of at least one of isoprene and 1,3-butadiene and from styrene copolymerized with at least one of isoprene and 1,3-butadiene. Representative conjugated diene-based elastomers are, for example, comprised of at least one of cis 1,4-polyisoprene (natural and synthetic), cis 1,4-polybutadiene, styrene/butadiene copolymers (aqueous emulsion polymerization prepared and organic solvent solution polymerization prepared) (e.g., SSBR), medium vinyl polybutadiene having a vinyl 1,2-content in a range of 15 to 90 percent, isoprene/butadiene copolymers, and styrene/isoprene/butadiene terpolymers. The rubber composition may include butyl and/or halobutyl rubber. Tin coupled elastomers may also be used, for example, tin coupled organic solution polymerization prepared styrene/butadiene copolymers, isoprene/butadiene copolymers, styrene/isoprene copolymers, polybutadiene and styrene/isoprene/butadiene terpolymers. In one embodiment, the conjugated diene-based elastomer may be an elastomer, such as a styrene/butadiene copolymer containing at least one functional group reactive with hydroxyl groups on a precipitated silica. For example, the functional group may include at least one of siloxy, amine, imine, and thiol groups, for example, comprised of a siloxy and least one of amine and thiol groups.

In embodiments of the invention, the rubber composition includes turbostratic graphene in an amount of at least 1 phr to 50 phr, and more preferably from 1 phr to 20 phr. In that regard, and in one embodiment, the rubber composition lacks Hummers graphene or lacks graphene from a similar process to the Hummers process described above and in which graphene particles are functionalized to facilitate dispersion into and bonding with the rubber composition.

Turbostratic graphene particles differs from graphene particles made according to the modified Hummers method, for comparison purposes.

Compositionally, turbostratic graphene lacks significant (e.g., less than 25 wt. %) quantities of oxygen, because graphite is not intentionally oxidized during manufacturing. For that reason, turbostratic graphene is 85% to 100% carbon by weight.

By way of additional example, the turbostratic graphene may include a higher level of oxygen and so be at least 75 wt. % carbon. Thus, in preferred embodiments of the invention, the graphene is not functionalized prior to dispersion in an oil and/or in the rubber composition.

Whereas, by comparison, graphene from the modified Hummers Method contains measurable oxygen, typically at a ratio of 1 to 4 (e.g., 30 wt. % oxygen) with carbon due to chemical oxidation during manufacturing and requires pretreatment prior to use.

Turbostratic graphene differs microstructurally from graphene made in accordance with the modified Hummers method or other mechanical, chemical, and/or thermal methods, as described above. Generally, in graphene, carbon atoms are bonded to one another to form a hexagon shaped lattice. This appears as a honeycomb-shaped ring. Placing one layer of graphene atoms on top of another layer of graphene atoms forms a bilayer of graphene. Normally, adjacent atomic layers are arranged in one of two positions. In one position, the geometric centers of the hexagons of carbon atoms are organized immediately above one another. This center-to-center alignment is referred to as AA stacking. That is, the adjacent atomic layers of carbon mirror one another.

In another orientation, the hexagons of carbon atoms are displaced relative to one another so that the geometric centers of the hexagons of carbon atoms in adjacent layers are not center-above-center. That is, relative to the AA stacked layers, the carbon layers are shifted laterally. A carbon atom in one layer is above (or below) the center of the adjacent hexagon of carbon in an adjacent layer. This amounts to a shift of one-half a length dimension of a hexagon of carbon atoms relative to AA stacked layers. This is referred to as AB stacking (Bernal). AB stacking of two adjacent layers of carbon atoms leads to the formation of graphene with semiconducting properties by applying an external electric field.

In one embodiment, the turbostratic graphene is neither AA stacked nor AB stacked. Instead, in one embodiment of the invention, the graphene includes particles in which adjacent carbon layers are more disordered than either AA or AB stacking. And, that disorder is randomized. This random orientation of layers may be referred to as twisted, rotated, weakly coupled, rotationally faulted, and misoriented. That is, the layers may be shifted one relative to another in one or more directions. Visually, rather than an ordered stack of platelets in which the face of each layer is stacked neatly against a face of an adjacent layer, the platelets may be stacked edge-to-face and/or shifted or rotated in one or more directions to be out of alignment face-to-face. The turbostratic graphene structure may appear as a house of cards rather than as a neat stack of cards. As such, an average interlayer spacing between adjacent layers is increased relative to AA stacked or AB stacked graphene. The interlayer spacing for turbostratic graphene according to embodiments of the invention is in the range of 3.40 Å to 3.45 Å. By comparison, the interlayer spacing of turbostratic graphene is greater than the interlayer spacing of AB stacked graphene, which is 3.37 Å, and interlayer spacing of AA stacked graphene is believed to be greater than the interlayer spacing of AB stacked graphene because electron clouds of carbon atoms in adjacent layers directly overlap, requiring greater distance between carbon atoms on adjacent layers. The interlayer spacing may be measured and examined by several methods. Furthermore, Raman Spectroscopy may be used to characterize graphene microstructure.

In that regard, and as another difference, the quality of turbostratic graphene is often higher than graphene from the mechanical, chemical, and/or thermal methods described above. As a result, turbostratic graphene often lacks significant defects in the edges and in the layers of the carbon-carbon bonded layers. The defect level, and consequently the improved quality, of the layers may be estimated by a ratio of intensities of peaks from Raman Spectroscopy. For example, it is believed to be advantageous to utilize turbostratic graphene with a 2D peak intensity (I_{2D}) to G peak intensity (I_{G}) (i.e., the I_{2D/G} ratio) of at least 0.5. The I_{2D/G} ratio for turbostratic graphene could be as high as 17 depending on the feedstock and production process used but, in many cases, is at least 1. The I_{2D/G} ratio for turbostratic graphene is higher than traditional AB stacked graphene produced from the mechanical, chemical, and/or thermal methods described above. For example, it is believed that the I_{2D/G} ratio for AB stacked graphene is 0.3 or less.

Raman spectroscopy also allows for directly probing the defect density via the D-band peak intensity (I_{D}) relative to the G peak intensity (I_{G}). Peak intensity can range from an almost non-existent D-band peak for turbostratic graphene. In one embodiment, turbostratic graphene has a very low to absent D peak (I_{D}) and hence a very low I_{D/G} ratio. For example, turbostratic graphene may exhibit an I_{D/G} ratio approaching 0 (i.e., a measurable amount) to an I_{D/G} ratio of 1. Morphologies of turbostratic graphene may be unique in that regard while still maintaining the 2D graphene character. The uniqueness may be the result of relatively weak interactions between the misaligned and shifted orientation of the adjacent carbon layers. Therefore, with turbostratic graphene, it is possible to have multiple carbon layers stacked on one another but take advantage of the unique 2D properties of turbostratic graphene. Exemplary morphologies may include polyhedral structures and sheets in which the turbostratic graphene particles themselves form 3D shapes. For example, the turbostratic graphene particle may be bent to form an L-shaped particle. Additional bends may produce other 3D structures though the particles retain 2D properties. Advantageously, these unique 2D properties are present with increased interlayer spacing. This combination of interlayer spacing and unique microstructure may permit improved exfoliation, dispersion, and interaction with elastomeric materials, such as in the rubber composition described above. It is contemplated that the unique morphology of turbostratic relative to AB-stacked graphene permits its efficient dispersion in rubber compositions and is attributable to beneficial properties of the rubber compositions according to embodiments of the invention.

Furthermore, turbostratic graphene can be identified versus AB stacked graphene by using Raman spectroscopy and referencing three unique peak locations. In addition to the D, G, and 2D bands already mentioned for graphene and turbostratic graphene there are also 2 peaks that are present only for turbostratic graphene. Thus, turbostratic graphene has five main peaks compared to AB-stacked graphene, which has three main peaks. These additional two peaks are only active for single layer graphene and turbostratic graphene. These two unique peaks are due to a combination of in-plane transverse acoustic and longitudinal optic modes (referred to as "turbostratic peak 1") and a combination of in-plane transverse acoustic, longitudinal acoustic, longitudinal optic/longitudinal acoustic modes (referred to as "turbostratic peak 2"). Turbostratic peak 1 occurs at about 1880 cm⁻¹ and turbostratic peak 2 occurs at about 2030 cm⁻¹. In addition to these 2 active peaks for turbostratic graphene, turbostratic graphene lacks an M band peak that occurs at 1750 cm⁻¹. The presence of the M band indicates AB stacked graphene and not turbostratic graphene. Because measured peaks exhibit dispersion, notation of the excitation wavelength/frequency (e.g., laser wavelength) used is necessary to make comparisons between measurements on different materials. With that information, corrections may be made when comparing peak locations.

In preferred embodiments of the invention, turbostratic graphene particles have a range of length and a range of width dimensions (i.e., measured in the plane of the hexagonal rings of carbon) of 10 nm to 10 µm.

In preferred embodiments of the invention, the turbostratic graphene particles have a range of length and a range of width dimensions of 200 nm to 5 µm.

In the thickness direction, that is, measured perpendicular to the length and width of hexagonal rings of carbon, the turbostratic graphene particles may be a monolayer of carbon atoms and so may be angstroms thick (e.g., less than 10 Å). Alternatively, each turbostratic graphene particle may include multiple layers, for example, each particle may include between 2-10 layers of individual planes of carbon atoms arranged in hexagons. By way of additional example and not limitation turbostratic graphene particle may include 2-5 layers.

One method of producing turbostratic graphene is described in WO 2021/068087 and in WO 2020/051000.

Advantageously, turbostratic graphene made in accordance with these publications is made from waste products, including used tires. Turbostratic graphene made in accordance with these publications is available from Universal Matter in Houston, Texas. Thus, use of this graphene from waste products increases a portion of recycled materials in the tire 10 and further enhances the sustainability of these tires.

Applicants discovered that turbostratic graphene does not require functionalization as detailed in US 9,757,983 for dispersing it in rubber compositions according to the present invention.

Other fillers may be mixed with the rubber composition. By way of example, other fillers include amorphous silica or siliceous pigments. This includes precipitated siliceous pigments and fumed (pyrogenic) silica in which aggregates of precipitated silicas may be present. Silica may be present in an amount of 0 to 150 phr. If included, silica fillers may include aggregates obtained by the acidification of a soluble silicate, e.g., sodium silicate and may include co-precipitated silica and a minor amount of aluminum. The silica particles may have a BET surface area, as measured using nitrogen gas, in the range of 40 m² per gram to 600 m² per gram, and more usually in a range of 50 m² per gram to 300 m² per gram. The silica particles may also be characterized by having a dibutylphthalate (DBP) absorption value in a range of 50 cc/100 g to 400 cc/100 g, and more usually 100 to 300 cc/100 g (according to ASTM D2414). Various commercially available precipitated silicas usable, for example, include silicas from PPG Industries under the Hi-Sil trademark including Hi-Sil 210, Hi-Sil 243, and Agilon 400G-D; silicas sold under the marks Zeosil 1165MP and Zeosil 165GR from Solvay; silicas from Evonik designated VN2 and VN3, as well as other grades of silica, particularly precipitated silicas, which can be used for elastomer reinforcement. Coupling agents may be used if desired to aid in coupling the silica with hydroxyl groups on its surface.

In one embodiment, carbon black may be added to the rubber composition at less than 150 phr. For example, the rubber composition may include from 0.5 phr to 150 phr, and by way of additional example may be from 0.5 phr to 4 phr carbon black.

The rubber composition may include an oil, for example, up to 50 phr. When present, oils can include, for example, aromatic, napthenic, paraffinic and/or vegetable oils. By way of example, the oil may be present from 1 phr up to 20 phr in addition to oil for a dispersion of the turbostratic graphene, when dispersed, described below. The dispersion of the turbostratic graphene particles of a given amount includes 20 wt.% to 50 wt.% oil. The oil used for the dispersion of the turbostratic graphene particles may be of the aromatic, napthenic, paraffinic, and/or vegetable oil type. Typically, the total oil loading in the formulation will be adjusted to account for the oil addition coming from the turbostratic graphene dispersion.

In one embodiment, the rubber composition may include a wax. Typical amounts of wax are from 1 to 5 phr. Exemplary wax includes a microcrystalline wax and/or a refined paraffin wax.

Other components may include a resin, which if used, may be included up to 30 phr. An exemplary resin is alpha methyl styrene styrene resin. The rubber composition may include antioxidants, for example in an amount from 1 to 5 phr. Representative antioxidants may be, for example, diphenyl-p-phenylenediamine and others or mixtures of those antioxidants, for example, those disclosed in *The Vanderbilt Rubber Handbook* (1978) at pages 344 through 346. Fatty acids may also be added to the rubber composition. These can include stearic acid and combinations of stearic acid with one or more of palmitic acid oleic acid and may comprise, for example, from 0.5 to 3 phr. Zinc oxide is also added to the rubber composition and may be present in an amount from 1 to 10 phr. Peptizers, where used, may be present in an amount from 0.1 to 1 phr.

In one embodiment, a bifunction organo silane is present in an amount of 5 phr to 10 phr. The silane may function as a silica coupler and may be at least one of bis(3-trialkoxysilylpropyl) polysulfide containing an average of from 2 to 4 connecting sulfur atoms in its polysulfidic bridge and alkoxyorganomercaptosilane, particularly an alkoxyorganomercaptosilane. Representative of a bis(3-trialkoxysilylpropyl) polysulfide is bis(3-triethoxysilylpropyl) polysulfide. By way of example only, representative organomercaptosilanes are triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

Processing aids may be added to the rubber composition. These may include fatty acid derivatives and be present in amount from 1 phr to 5 phr.

Vulcanization is conducted in the presence of a sulfur-vulcanizing agent. The sulfur-vulcanizing agents may be used, for example, in an amount ranging from 0.5 to 4 phr or up to 8 phr. Examples of suitable sulfur-vulcanizing agents include elemental sulfur (free sulfur) or sulfur donating vulcanizing agents, for example, an amine disulfide, polymeric polysulfide, or sulfur olefin adducts.

Sulfur vulcanization accelerators may be used to control the time and/or temperature required for vulcanization and to improve the properties of the vulcanizate. In one embodiment, a single accelerator system may be used, i.e., primary accelerator. A primary accelerator may be added in total amounts ranging, for example, from 0.5 phr to 4 phr, and by way of additional example, from 0.8 phr to 1.5 phr. In one embodiment, a secondary accelerator may be used with the primary accelerator. The secondary accelerator may be added in smaller amounts than the primary accelerator, for example, from 0.05 to 3 phr. This may activate and to improve the properties of the vulcanizate. Preferably, the primary accelerator is a sulfenamide. If a secondary accelerator is used, the secondary accelerator may be, for example, a guanidine, dithiocarbamate or thiuram compound. In addition, delayed action accelerators may be used, for example, which are not affected by normal processing temperatures but produce a satisfactory cure at ordinary vulcanization temperatures. Vulcanization retarders might also be used, where desired or appropriate. Suitable types of accelerators include, for example, amines, disulfides, guanidines, thioureas, thiazoles, thiurams, sulfenamides, dithiocarbamates, and xanthates.

In one embodiment, the rubber composition consists essentially of 100 phr of at least one diene-based elastomer, 1 phr to 50 phr of turbostratic graphene, optionally up to 50 phr of oil, optional additional fillers up to 150 phr of each of carbon black and silica, and optionally 1 to 5 phr of wax and/or resin up to 30 phr so as to have a higher thermal conductivity, thermal diffusivity, and abrasion resistance while at least maintaining, and in some instances, improving the bulk tear resistance and adhesive tear relative to a rubber composition without any graphene. As used herein, "consisting essentially of" means that no other components are intentionally added to the rubber composition. However, impurity content of other components or the fabrication process may be contemplated.

The turbostratic graphene may be added to the rubber composition by any method. For example, the turbostratic graphene may be added by direct free-particle addition (i.e., without a carrier). The rubber composition may then be oil-free. Other methods may include addition to the rubber compound or to the master batch. If dispersed prior to addition in either situation, a dispersion of the turbostratic graphene may be prepared. A selected amount of the turbostratic graphene is added to a carrier. The carrier may be an oil, resin, or rubber masterbatch. One exemplary carrier is the oil of the rubber composition. With that exemplary oil, the oil is divided between direct addition and the amount utilized to disperse the turbostratic graphene. Common methods for dispersion of graphene within various matrices can be employed for the dispersion of turbostratic graphene in this embodiment. As an example, a high shear mixer or other high shear apparatus can be used to exfoliate and disperse the turbostratic graphene particles in the oil.

The rubber composition may be compounded by methods generally known in the rubber compounding art. These include mixing the sulfur-vulcanizable constituent rubbers with additive materials including those described above and others. For example, curing aids, such as sulfur; activators; retarders and accelerators; processing additives, such as oils, resins including tackifying resins; plasticizers; pigments; fatty acids; zinc oxide; waxes; antioxidants; peptizing agents; and reinforcing fillers materials, for example, the turbostratic graphene, carbon black, and silica may be mixed together.

The mixing of the rubber composition can be accomplished by methods known to those having skill in the rubber mixing art. For example, the ingredients are typically mixed in at least two stages, namely, at least one non-productive stage followed by a productive stage. The rubber and reinforcing fillers including the turbostratic graphene are mixed in one or more non-productive mix stages. The curatives (e.g., sulfur and accelerators) are typically mixed with the rubber and reinforcing fillers in the productive stage in which the mixing typically occurs at a temperature lower than the mix temperature(s) than the preceding non-productive stage(s).

The following Examples are nonlimiting and are presented to illustrate aspects of the invention.

### EXAMPLES

Exemplary Sample B and Sample C in Table 1 include 3 phr of turbostratic graphene with different surface area, morphology, and defect ratio and all other components being in the same proportions. Sample E contains 3 phr of AB-stacked graphene with all other components being in the same proportion. Comparative rubber Samples A and D in Table 1 do not contain turbostratic graphene or graphene with all other components being present in the same proportion. All values in the following Tables are phr unless indicated otherwise.

Samples D and E were mixed and tested separately from Samples A, B, and C. Sample A and Sample D are the exact same formulation for comparison between the two separate mix/test sets. The samples are believed to represent a realistic comparison of compounds with no graphene, with traditional AB stacked graphene, and with turbostratic graphene.

Each of the Samples A, B, C, D, and E were prepared by mixing the listed components in a non-productive (NP1) mixing stage at an elevated temperature without sulfur and sulfur cure accelerators. In a final, productive (PR) mixing stage at a lower mixing temperature, the sulfur and sulfur cure accelerators were mixed into the formulation. The rubber composition was sheeted out and cooled after the non-productive step prior to the productive mixing step.

**Table 1**

| Ingredients | Stage | Sample A | Sample B | Sample C | Sample D | Sample E |
|---|---|---|---|---|---|---|
| Polyisoprene¹ | NP1 | 100 | 100 | 100 | 100 | 100 |
| Carbon Black² | NP1 | 60 | 60 | 60 | 60 | 60 |
| 6PPD | NP1 | 2 | 2 | 2 | 2 | 2 |
| Oil³ | NP1 | 12 | 12 | 12 | 12 | 12 |
| Zinc Oxide | NP1 | 3 | 3 | 3 | 3 | 3 |
| Fatty acid | NP1 | 2 | 2 | 2 | 2 | 2 |
| Turbostratic Graphene⁴ | NP1 | 0 | 3 | 0 | 0 | 0 |
| Turbostratic Graphene⁵ | NP1 | 0 | 0 | 3 | 0 | 0 |
| Graphene⁶ | NP1 | 0 | 0 | 0 | 0 | 3 |
| Sulfur | PR | 1.2 | 1.2 | 1.2 | 1.2 | 1.2 |
| TBBS Accelerator | PR | 1.6 | 1.6 | 1.6 | 1.6 | 1.6 |
| Retarder⁷ | PR | 0.5 | 0.5 | 0.5 | 0.5 | 0.5 |
| Total phr | | 182.3 | 185.3 | 185.3 | 182.3 | 185.3 |

| | | | | | | |
|---|---|---|---|---|---|---|
| ¹cis 1,4-polyisoprene ²ASTM N299 Carbon Black ³Naphthenic type ⁴Turbostratic graphene as a dispersion of 20% by weight in naphthenic oil (oil content included in total oil reported) ⁵Turbostratic graphene as a dispersion of 20% by weight in naphthenic oil (oil content included in total oil reported) ⁶AB-stacked graphene as a dispersion of 20% by weight in naphthenic oil (oil content included in total oil reported) ⁷N-cyclohexylthiophthalimide | | | | | | |

The following Table 2 represents the uncured and cured behavior and various physical properties of the rubber compositions based upon the formulation of Table 1 and reported for Samples A, B, C, D, and E.

**Table 2**

| Sample | | Sample A | Sample B | Sample C | Sample D | Sample E |
|---|---|---|---|---|---|---|
| Cure | Delta Torque MDR 150°C | 15.0 | 15.3 | 16.2 | 15.3 | 16.0 |
| | T25 MDR 150°C (min) | 11.4 | 11.1 | 11.8 | 11.6 | 11.5 |
| | T90 MDR 150°C (min) | 18.4 | 17.8 | 18.9 | 18.4 | 18.9 |
| Processing | RPA G' Uncured (MPa) | 0.242 | 0.256 | 0.267 | 0.249 | 0.256 |
| Stiffness, Hardness | RPA G' 1% (MPa) | 2.43 | 2.57 | 2.87 | 2.45 | 2.56 |
| | RPA G' 10% (MPa) | 1.19 | 1.24 | 1.33 | 1.20 | 1.23 |
| | RPA G' 50% (MPa) | 0.76 | 0.77 | 0.80 | 0.72 | 0.75 |
| | ARES G' 1% (MPa) | 4.28 | 4.55 | 5.05 | -- | -- |
| | ARES G' 10% (MPa) | 1.77 | 1.86 | 2.01 | -- | -- |
| | ARES G' 50% (MPa) | 1.01 | 1.12 | 1.16 | -- | -- |
| | Shore A (23°C) | 63.4 | 62.3 | 64.8 | -- | -- |
| | Shore A (100°C) | 58.7 | 58.2 | 60.5 | 58.1 | 58.2 |
| Modulus, Tensile, Elongation | Elongation (Die C, %) | 518 | 509 | 504 | 525 | 508 |
| | Tensile (Die C, MPa) | 24.5 | 23.0 | 23.9 | 24.1 | 24.4 |
| | 100% Modulus (Die C, MPa) | 2.56 | 2.53 | 2.82 | 2.45 | 3.05 |
| | 300% Modulus (Die C, MPa) | 12.90 | 12.75 | 13.46 | 12.49 | 13.51 |
| Wet Indicator | Rebound 0°C | 27 | 27 | 26 | 29 | 29 |
| RR Indicator | Rebound 23°C | 40 | 40 | 38 | 41 | 41 |
| | Rebound 60°C | 53 | 53 | 51 | 54 | 54 |
| | Rebound 100°C | 61 | 62 | 60 | 63 | 63 |
| | RPA TD 10% | 0.191 | 0.197 | 0.205 | 0.191 | 0.193 |
| | ARES TD 10% | 0.251 | 0.233 | 0.238 | -- | -- |
| Tear | Instron Tear w/ Backing 95°C (N/mm) | 57 | 57 | 53 | 53 | 20 |
| | Strebler Tear 100°C (N/mm) | 23 | 23 | 18 | 28 | 6 |
| Abrasion Loss | Grosch, High Severity (mg/km) | 345 | 356 | 289 | 378 | 595 |
| Conductivity | Thermal Conductivity (W/m·K) | 0.2996 | 0.3051 | 0.3027 | 0.2880 | 0.3268 |
| | Thermal Diffusivity (mm²/S) | 0.1797 | 0.1870 | 0.1743 | 0.1636 | 0.2082 |

With reference to Table 2, Applicants concluded that addition of the turbostratic graphene to the rubber composition can beneficially improve the thermal conductivity and thermal diffusivity of the rubber composition while unexpectedly maintaining or improving abrasion resistance and tear resistance. When comparing Sample A and Sample D with Samples B, C, and E, the addition of turbostratic graphene increases the thermal conductivity and thermal diffusivity while also improving the abrasion resistance (lower abrasion loss as shown in Table 2). Further, in Samples B and C the tear resistance (Instron tear) and adhesive tear (Strebler tear) are maintained relative to Samples A and D. And, Samples B and C have hysteresis that is mostly equivalent depending on the indicator used (for example Sample C has about 5% lower tangent delta (ARES) than Sample A, indicating improved hysteresis while hot rebound indicates Sample C is about 2% worse than Sample A) and increased compound stiffness (G') relative to Samples A and D.

This balance of properties is also not evident, as shown in Table 2, for Sample E, which contains traditional AB stacked graphene at the same loading level of the turbostratic graphene (Samples B and C). Traditional AB stacked graphene (Sample E) does improve the thermal conductivity and thermal diffusivity of the compound relative to Samples A and D (no graphene) and increases the compound stiffness. However, for Sample E, tear resistance and abrasion resistance are reduced significantly in comparison to not including graphene (Samples A and D) or to including turbostratic graphene (Samples B and C). Tables 1 and 2 provide evidence that turbostratic graphene uniquely and unexpectedly provides an excellent and beneficial balance of physical properties without the need for specialized functionalization of the graphene, or other strategies and additives to aid in dispersion of the graphene in the rubber composition. As such, this also advantageously improves the manufacturability of rubber compositions with turbostratic graphene.

With reference to Table 3 (below), Sample A is a control with a blend of natural rubber and ESBR 1502 and a loading of 48 phr carbon black with 5 phr oil. Sample A does not include any turbostratic graphene or AB stacked graphene. Samples B-E each contain the same loading of natural rubber, ESBR 1502, and oil as the control Sample A, but Samples B-E also contain 5 phr of turbostratic graphene. The only variation within Samples B-E are the properties/characteristics of each specific turbostratic graphene.

Control Sample H matches the formulation of Sample A but contains an increased loading of 20 phr oil, versus 5 phr in Sample A. Sample F matches the formulation of Sample H but additionally has 5 phr of traditional AB stacked graphene. Sample G matches the formulation of Sample H but additionally contains 5 phr of turbostratic graphene. All samples were prepared using the same processing parameters.

**Table 3**

| Sample | A | B | C | D | E | F | G | H |
|---|---|---|---|---|---|---|---|---|
| Natural Rubber | 80 | 80 | 80 | 80 | 80 | 80 | 80 | 80 |
| ESBR Type 1502¹ | 20 | 20 | 20 | 20 | 20 | 20 | 20 | 20 |
| Carbon Black² | 48 | 48 | 48 | 48 | 48 | 48 | 48 | 48 |
| Oil³ | 5 | 5 | 5 | 5 | 5 | 20 | 20 | 20 |
| Turbostratic Graphene⁴ | 0 | 5 | 0 | 0 | 0 | 0 | 0 | 0 |
| Turbostratic Graphene⁵ | 0 | 0 | 5 | 0 | 0 | 0 | 0 | 0 |
| Turbostratic Graphene⁶ | 0 | 0 | 0 | 5 | 0 | 0 | 5 | 0 |
| Turbostratic Graphene⁷ | 0 | 0 | 0 | 0 | 5 | 0 | 0 | 0 |
| Graphene⁸ | 0 | 0 | 0 | 0 | 0 | 5 | 0 | 0 |

| | | | | | | | | |
|---|---|---|---|---|---|---|---|---|
| ¹Available as PLF1502 from Goodyear Chemical ²ASTM N220 Carbon Black ³Naphthenic type ⁴Turbostratic graphene as a dispersion of 50% by weight in naphthenic oil (oil content included in total oil reported) ⁵Turbostratic graphene as a dispersion of 50% by weight in naphthenic oil (oil content included in total oil reported) ⁶Turbostratic graphene as a dispersion/rubber masterbatch of 36.5% by weight in 52% ESBR Type 1502, 10.5% oil, and 1% polyethylene wax (oil and ESBR content included in total oil and ESBR content reported) ⁷Turbostratic graphene as a dispersion/rubber masterbatch of 36.5% by weight in 52% ESBR Type 1502, 10.5% oil, and 1% polyethylene wax (oil and ESBR content included in total oil and ESBR content reported) ⁸AB-stacked graphene as a dispersion of 20% by weight in naphthenic oil (oil content included in total oil reported) | | | | | | | | |

Table 4 provides the results of testing of the uncured and cured behavior and various physical properties of the rubber compositions of the compositions of Samples A, B, C, D, E, F, G, and H.

**Table 4**

| Sample | | A | B | C | D | E | F | G | H |
|---|---|---|---|---|---|---|---|---|---|
| Cure | Delta Torque MDR 150°C | 11.0 | 11.6 | 12.8 | 11.5 | 11.3 | 7.9 | 8.0 | 7.5 |
| | T25 MDR 150°C (min) | 19.4 | 18.4 | 18.7 | 19.0 | 19.3 | 22.9 | 22.4 | 22.6 |
| | T90 MDR 150°C (min) | 63.2 | 59.9 | 60.7 | 62.7 | 61.6 | 70.4 | 67.0 | 68.3 |
| Processin g | RPA G' Uncured (MPa) | 0.167 | 0.182 | 0.209 | 0.175 | 0.18 | 0.121 | 0.127 | 0.124 |
| Stiffness, Hardness | RPA G' 1% (MPa) | 2.15 | 2.58 | 3.01 | 2.40 | 2.37 | 1.44 | 1.44 | 1.33 |
| | RPA G' 10% (MPa) | 1.04 | 1.16 | 1.26 | 1.12 | 1.13 | 0.73 | 0.74 | 0.70 |
| | RPA G' 100% (MPa) | 0.52 | 0.54 | 0.56 | 0.55 | 0.56 | 0.38 | 0.39 | 0.38 |
| | RPA G' 140% (MPa) | 0.45 | 0.47 | 0.49 | 0.477 | 0.49 | 0.336 | 0.347 | 0.335 |
| Modulus, Tensile, Elongation | Elongation (Die C, %) | 647 | 597 | 600 | 591 | 571 | 636 | 654 | 678 |
| | Tensile (Die C, MPa) | 22.2 | 21.0 | 21.7 | 21.3 | 20.7 | 17.6 | 17.2 | 17.4 |
| | 100% Modulus (Die C, MPa) | 1.76 | 1.86 | 1.97 | 2.12 | 2.17 | 1.58 | 1.3 | 1.18 |
| | 300% Modulus (Die C, MPa) | 7.88 | 8.32 | 8.78 | 8.76 | 8.95 | 5.77 | 5.03 | 4.68 |
| RR Indicator | Rebound 100°C | 53 | 51 | 49 | 52 | 50 | 52 | 53 | 53 |
| | RPA TD 10% | 0.198 | 0.211 | 0.224 | 0.203 | 0.201 | 0.192 | 0.184 | 0.181 |
| Tear | Instron Tear w/ Backing 95°C (N/mm) | 107 | 99 | 102 | 93 | 95 | 18 | 77 | 91 |
| | Strebler Tear 100°C (N/mm) | 26 | 58 | 57 | 44 | 49 | 9 | 26 | 13 |
| Abrasion Loss | Grosch, High Severity (mg/km) | 577 | 515 | 492 | 675 | 700 | 1048 | 860 | 838 |
| | Grosch, Medium Severity (mg/km) | 49 | 49 | 47 | 53 | 56 | 64 | 50 | 44 |
| Conductivi ty | Thermal Conductivi ty (W/m·K) | 0.286 8 | 0.304 6 | 0.309 5 | 0.309 8 | 0.296 4 | 0.322 8 | 0.291 1 | 0.272 5 |
| | Thermal Diffusivity (mm²/S) | 0.163 2 | 0.175 5 | 0.177 2 | 0.184 2 | 0.170 9 | 0.206 6 | 0.170 7 | 0.156 8 |

With reference to Table 4, improved physical properties are shown to be due to the addition of turbostratic graphene. This is evidenced by comparison of Samples B-E and G (i.e., rubber compositions with turbostratic graphene) to Samples A and H (i.e., rubber compositions without either AB-stacked graphene or turbostratic graphene) and also compared to Sample F (i.e., rubber composition with AB-stacked graphene).

First, for Samples B-E, the increase in compound stiffness (G') across all strain levels compared to Sample A is shown. This increase in stiffness (e.g., 10% to 40% at 1% strain, 4% to 8% at 100% strain) comes with an increase in hysteresis, as evidenced by tangent delta and hot rebound values. However, the magnitude of the impact on hysteresis is much less than expected for such increases in G'. This influence on the hysteresis is not entirely unexpected but is unexpected in view of other characteristics, which are maintained or improved. That is, including turbostratic graphene does not result in a trade-off between stiffness across all strain levels and hysteresis. Unexpectedly, the tear properties (Instron tear and Strebler tear) of Samples B-E (i.e., rubber compositions with turbostratic graphene), are at least maintained in some Samples compared to Sample A with Strebler Tear properties being improved relative to Sample A. In the case of Sample C, for example, the Strebler tear improved by about 119% compared to Sample A. Additionally, abrasion loss at medium and high severity conditions (an indicator for treadwear) of Sample B-E is at least maintained relative to Sample A, with lower abrasion losses under high severity abrasion for Samples B and C than for Sample A. This variation is thought to depend on turbostratic graphene characteristics, such as morphology, surface area, structure, defect type, and defect density. Additionally, the data in Table 4 shows that the turbostratic graphene can improve the thermal conductivity of the compound by at least 3% to as much 8% in this example, compared to control Sample A.

Table 4 permits a comparison of turbostratic graphene (Samples B-E) to AB-stacked graphene (Sample F). Both Sample F (AB stacked graphene) and Sample G (turbostratic graphene) result in slightly increased compound stiffness levels (G') across all strain levels relative to Sample H (i.e., up to 8% increase at 1% strain and 2% increase at 100% strain). However, the influence on stiffness level from the AB-stacked graphene in Sample F seems to diminish with increased strain level, whereas stiffness of Sample G does not. For example, at 140% strain, the G' stiffness for Sample G is about 3.5% higher than Sample H, whereas Sample F is equivalent to Sample H.

With regard to hysteresis (tangent delta and hot rebound), Sample F (AB stacked graphene) is higher than Sample G (turbostratic graphene). Both Samples F and G have equivalent to slightly higher hysteresis (e.g., 1.5% to 6% for tangent delta 10%) than Sample H (no graphene), depending on the indicator used.

As mentioned above, unexpectedly, the tear (Strebler and Instron tear) for Sample G (turbostratic graphene) is maintained, if not improved, compared to Sample H (no graphene). In comparison, Sample F (AB stacked graphene) shows that the tear properties are dramatically worse (e.g., 80% worse for Instron tear and 30% worse for Strebler tear) with the addition of the same loading of traditional AB stacked graphene. This is evidence that it is desirable and an advantage to include turbostratic graphene.

Another aspect of the improved properties coming from the use of turbostratic graphene comes from the abrasion loss, as mentioned previously. The abrasion loss for Sample F (AB-stacked graphene) was considerably worse (e.g., 22% worse for Grosch, high severity) than with Sample G (turbostratic graphene).

Table 4 is evidence that the thermal conductivity of the compound with AB-stacked graphene (Sample F) was improved by about 18% relative to the thermal conductivity of Sample H. By comparison, the thermal conductivity of Sample G (turbostratic graphene) was improved by about 7% relative to the thermal conductivity of Sample H. While the improvement in thermal conductivity for AB-stacked graphene was much more significant than with turbostratic graphene, it is believed that turbostratic graphene is advantageous because its use balances the other properties as outlined above and/or meets the performance enhancements.

## Claims

1. A pneumatic tire comprising a rubber composition, the rubber composition comprising 100 phr of at least one diene-based elastomer and 1 phr to 50 phr of turbostratic graphene, wherein the turbostratic graphene exhibits a peak in a range of from 1870 cm⁻¹ to 1890 cm⁻¹ in Raman spectroscopy and/or wherein the turbostratic graphene exhibits a peak in a range of from 2020 cm⁻¹ to 2040 cm⁻¹ in Raman spectroscopy.

2. The tire of claim 1 wherein the turbostratic graphene comprises less than 25 wt.% oxygen.

3. The tire of claim 1 or 2 wherein the turbostratic graphene exhibits a peak at 1880 cm⁻¹ in Raman spectroscopy and/or exhibits a peak at 2030 cm⁻¹ in Raman spectroscopy.

4. The tire of at least one of the previous claims wherein the turbostratic graphene exhibits a 2D peak intensity (I_{2D}) to G peak intensity (I_{G}) ratio of at least 0.5 or of at least 1 in Raman spectroscopy.

5. The tire of at least one of the previous claims wherein the turbostratic graphene exhibits a D peak intensity (I_{D}) to G peak intensity (I_{G}) ratio of less than 1 in Raman spectroscopy.

6. The tire of at least one of the previous claims wherein the turbostratic graphene lacks an M peak at 1750 cm⁻¹ in Raman spectroscopy or in a range of from 1740 cm⁻¹ to 1760 cm⁻¹ in Raman spectroscopy.

7. The tire of at least one of the previous claims wherein the turbostratic graphene is not functionalized.

8. The tire of at least one of the previous claims wherein the rubber composition further includes 0.5 phr to 150 phr of carbon black and/or 1 to 20 phr of oil.

9. The tire of at least one of the previous claims wherein the rubber composition is free of AB-stacked graphene.

10. The tire of at least one of the previous claims wherein the rubber composition comprises 1 to 10 phr, alternatively 3 to 7 phr, of said turbostratic graphene.

11. The tire of at least one of the previous claims wherein the rubber composition comprises at least two different elastomers as said at least one diene-based elastomer, preferably 60 to 95 phr or 70 to 90 phr of natural rubber and 5 to 40 phr or 10 to 30 phr of styrene-butadiene rubber.

12. A rubber composition for use in the manufacturing of a tire (10), the rubber composition comprising:
100 phr of at least one diene-based elastomer;
1 phr to 50 phr of turbostratic graphene, wherein the turbostratic graphene exhibits a peak in a range of from 1870 cm⁻¹ to 1890 cm⁻¹ in Raman spectroscopy and/or wherein the turbostratic graphene exhibits a peak in a range of from 2020 cm⁻¹ to 2040 cm⁻¹ in Raman spectroscopy;
optionally, up to 50 phr of oil;
optionally, up to 150 phr, preferably 10 to 150 phr, of each of carbon black and silica;
optionally, 1 to 5 phr of wax and/or up to 30 phr of a resin; and
a sulfur-vulcanizing agent.

## Patentansprüche

1. Luftreifen, der eine Kautschukzusammensetzung umfasst, wobei die Kautschukzusammensetzung 100 ThK mindestens eines Elastomers auf Dien-Basis und 1 ThK bis 50 ThK turbostratisches Graphen umfasst, wobei das turbostratische Graphen einen Peak in einem Bereich von 1870 cm⁻¹ bis 1890 cm⁻¹ in der Raman-Spektroskopie aufweist und/oder wobei das turbostratische Graphen einen Peak in einem Bereich von 2020 cm⁻¹ bis 2040 cm⁻¹ in der Raman-Spektroskopie aufweist.

2. Luftreifen nach Anspruch 1, wobei das turbostratische Graphen weniger als 25 Gew.-% Sauerstoff enthält.

3. Luftreifen nach Anspruch 1 oder 2, wobei das turbostratische Graphen einen Peak bei 1880 cm⁻¹ in der Raman-Spektroskopie und/oder einen Peak bei 2030 cm⁻¹ in der Raman-Spektroskopie aufweist.

4. Luftreifen nach mindestens einem der vorhergehenden Ansprüche, wobei das turbostratische Graphen ein Verhältnis von 2D-Peak-Intensität (I_{2D}) zu G-Peak-Intensität (I_{G}) von mindestens 0,5 oder von mindestens 1 in der Raman-Spektroskopie aufweist.

5. Luftreifen nach mindestens einem der vorhergehenden Ansprüche, wobei das turbostratische Graphen in der Raman-Spektroskopie ein Verhältnis von D-Peak-Intensität (I_{D}) zu G-Peak-Intensität (I_{G}) von weniger als 1 aufweist.

6. Luftreifen nach mindestens einem der vorhergehenden Ansprüche, wobei dem turbostratischen Graphen ein M-Peak bei 1750 cm⁻¹ in der Raman-Spektroskopie oder in einem Bereich von 1740 cm⁻¹ bis 1760 cm⁻¹ in der Raman-Spektroskopie fehlt.

7. Luftreifen nach mindestens einem der vorhergehenden Ansprüche, wobei das turbostratische Graphen nicht funktionalisiert ist.

8. Luftreifen nach mindestens einem der vorhergehenden Ansprüche, wobei die Kautschukzusammensetzung außerdem 0,5 phr bis 150 phr Ruß und/oder 1 bis 20 phr Öl enthält.

9. Luftreifen nach mindestens einem der vorhergehenden Ansprüche, wobei die Gummizusammensetzung frei von AB-gestapeltem Graphen ist.

10. Luftreifen nach mindestens einem der vorhergehenden Ansprüche, wobei die Kautschukzusammensetzung 1 bis 10 phr, alternativ 3 bis 7 phr, des turbostratischen Graphens umfasst.

11. Luftreifen nach mindestens einem der vorhergehenden Ansprüche, wobei die Kautschukzusammensetzung mindestens zwei verschiedene Elastomere als das mindestens eine Elastomer auf Dienbasis umfasst, vorzugsweise 60 bis 95 phr oder 70 bis 90 phr Naturkautschuk und 5 bis 40 phr oder 10 bis 30 phr Styrol-Butadien-Kautschuk.

12. Kautschukzusammensetzung zur Verwendung bei der Herstellung eines Luftreifens (10), wobei die Kautschukzusammensetzung Folgendes umfasst:
100 phr mindestens eines Elastomers auf Dien-Basis;
1 phr bis 50 phr turbostratisches Graphen, wobei das turbostratische Graphen einen Peak in einem Bereich von 1870 cm⁻¹ bis 1890 cm⁻¹ in der Ramanspektroskopie aufweist und/oder wobei das turbostratische Graphen einen Peak in einem Bereich von 2020 cm⁻¹ bis 2040 cm⁻¹ in der Ramanspektroskopie aufweist;
gegebenenfalls bis zu 50 phr Öl;
gegebenenfalls bis zu 150 phr, vorzugsweise 10 bis 150 phr, von Ruß und Kieselsäure;
gegebenenfalls 1 bis 5 phr Wachs und/oder bis zu 30 phr eines Harzes; und
ein Schwefel-Vulkanisierungsmittel.

## Revendications

1. Bandage pneumatique qui comprend une composition de caoutchouc ; dans lequel la composition de caoutchouc comprend 100 phr d'au moins un élastomère à base diénique et de 1 phr à 50 phr de graphène turbostratique ; dans lequel le graphène turbostratique présente un pic qui se situe dans une plage allant de 1870 cm⁻¹ à 1890 cm⁻¹ dans une spectroscopie Raman et/ou dans lequel le graphène turbostratique présente un pic qui se situe dans une plage allant de 2020 cm⁻¹ à 2040 cm⁻¹ dans une spectroscopie Raman.

2. Bandage pneumatique selon la revendication 1, dans lequel le graphène turbostratique comprend moins de 25 % en poids d'oxygène.

3. Bandage pneumatique selon la revendication 1 ou 2, dans lequel le graphène turbostratique présente un pic qui s'élève à 1880 cm⁻¹ dans une spectroscopie Raman et/ou présente un pic qui s'élève à 2030 cm⁻¹ dans une spectroscopie Raman.

4. Bandage pneumatique selon au moins une des revendications précédentes, dans lequel le graphène turbostratique présente un rapport entre un pic d'intensité dans la bande 2D (I_{2D}) et un pic d'intensité dans la bande G (I_{G}) qui s'élève à au moins 0,5 ou à au moins 1 dans une spectroscopie Raman.

5. Bandage pneumatique selon au moins une des revendications précédentes, dans lequel le graphène turbostratique présente un rapport entre un pic d'intensité dans la bande D (I_{D}) et un pic d'intensité dans la bande G (I_{G}) qui est inférieur à 1 dans une spectroscopie Raman.

6. Bandage pneumatique selon au moins une des revendications précédentes, dans lequel le graphène turbostratique ne présente pas un pic dans la bande M à 1750 cm⁻¹ dans une spectroscopie Raman ou dans une plage allant de 1740 cm⁻¹ à 1760 cm⁻¹ dans une spectroscopie Raman.

7. Bandage pneumatique selon au moins une des revendications précédentes, dans lequel le graphène turbostratique n'est pas fonctionnalisé.

8. Bandage pneumatique selon au moins une des revendications précédentes, dans lequel la composition de caoutchouc englobe en outre de 0,5 phr à 150 phr de noir de carbone et/ou de 1 à 20 phr d'une huile.

9. Bandage pneumatique selon au moins une des revendications précédentes, dans lequel la composition de caoutchouc est exempte de graphène empilé en configuration AB.

10. Bandage pneumatique selon au moins une des revendications précédentes, dans lequel la composition de caoutchouc comprend de 1 à 10 phr, en variante de 3 à 7 phr dudit graphène turbostratique.

11. Bandage pneumatique selon au moins une des revendications précédentes, dans lequel la composition de caoutchouc comprend au moins deux élastomères différents au titre dudit au moins un élastomère à base diénique, de préférence de 60 à 95 phr ou de 70 phr à 90 phr de caoutchouc naturel et de 5 à 40 phr ou de 10 à 30 phr d'un caoutchouc de styrène-butadiène.

12. Composition de caoutchouc pour son utilisation dans la confection d'un bandage pneumatique (10), dans laquelle la composition de caoutchouc comprend :
100 phr d'au moins un élastomère à base diénique ;
de 1 phr à 50 phr de graphène turbostratique ; dans lequel le graphène turbostratique présente un pic qui se situe dans une plage allant de 1870 cm⁻¹ à 1890 cm⁻¹ dans une spectroscopie Raman et/ou dans lequel le graphène turbostratique présente un pic qui se situe dans une plage allant de 2020 cm⁻¹ à 2040 cm⁻¹ dans une spectroscopie Raman ;
de manière facultative, jusqu'à 50 phr d'une huile ;
de manière facultative, jusqu'à 150 phr, de préférence de 10 à 150 phr, respectivement de noir de carbone et de silice ;
de manière facultative de 1 à 5 phr de cire et/ou jusqu'à 30 phr d'une résine ; et
un agent de vulcanisation au soufre.
